(19) Europäisches Patentamt / European Patent Office / Office européen des brevets

(11) **EP 3 790 164 A1**

(12) **EUROPEAN PATENT APPLICATION**
published in accordance with Art. 153(4) EPC

(43) Date of publication:
**10.03.2021 Bulletin 2021/10**

(51) Int Cl.:
*H02K 1/14* (2006.01)          *H02K 1/17* (2006.01)
*H02K 3/28* (2006.01)

(21) Application number: **19810529.8**

(22) Date of filing: **28.05.2019**

(86) International application number:
**PCT/CN2019/088747**

(87) International publication number:
**WO 2019/228328 (05.12.2019 Gazette 2019/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.05.2018 CN 201810530846**

(71) Applicant: **Novomoto Limited**
**Hong Kong 999077 (CN)**

(72) Inventor: **SUN, Quan**
**Hong Kong 999077 (CN)**

(74) Representative: **Manitz Finsterwald**
**Patent- und Rechtsanwaltspartnerschaft mbB**
**Martin-Greif-Strasse 1**
**80336 München (DE)**

(54) **STATOR, MOTOR, AND AUTOMATION EQUIPMENT**

(57) The present invention provides a stator, a motor, and automation equipment. The stator comprises a stator core and windings; the stator core comprises a yoke and multiple first salient poles and multiple second salient poles which extend from the yoke; the windings comprise first windings and second windings; the first salient poles are wound by the first windings, the second salient poles are wound by the second windings, and a phase difference between currents passing through the first windings and the second windings is 180 degrees; the corresponding second salient poles in the multiple second salient poles are provided at two sides of each of the multiple first salient poles, respectively, so that the magnetic flux flowing out of each first salient pole is distributed to the corresponding second salient poles. By adopting the technical solution of the present invention and using overall structure design, on the basis of principles of a unit motor, the reliability of a motor is improved, and machining of the motor is easy.

FIG. 1

## Description

TECHNICAL FIELD

The present disclosure relates to the field of driving technologies, and in particular, to a stator, a motor, and an automation device.

BACKGROUND

With the development of automation technology, people have higher demands on the reliability, machining convenience and the like of a motor, and the prior motors are usually difficult to satisfy the need of people.

SUMMARY

In view of the above, the present disclosure provides a stator, a motor, and an automation device, based on the principle of a modular motor, which adopt an integral structure design, thus improving the reliability of the motor and facilitating the machining of the motor.

A first aspect of the present disclosure provides a stator, the stator includes a stator core and a winding. The stator core includes a yoke and a plurality of first salient poles and a plurality of second salient poles extending from the yoke to at least one side. The winding includes a first winding and a second winding.

The first salient pole is wound with the first winding thereon; the second salient pole is wound with the second winding.

The phases difference of currents between the first winding and the second winding is 180 degrees.

Two sides of each of the plurality of first salient poles are respectively arranged corresponding second salient poles of the plurality of second salient poles, so that a magnetic flux flowing out of the first salient pole is shunted to the corresponding second salient pole.

Further, a width of the first salient pole is larger than a width of the second salient pole.

Further, a ratio of the width of the first salient pole to the width of the second salient pole satisfies:

$$1.5 \leq D/d \leq 2.5;$$

where $D$ is the width of the first salient pole and $d$ is the width of the second salient pole.

Further, the motor includes a rotary motor or a linear motor; or
the motor includes a radial magnetic flux motor or an axial magnetic flux motor.

Further, the first salient pole includes a first core and a first end located at an end of the first core, at least two first fake teeth are formed on an end face of the first end away from the first core, and a first fake slot is formed between two adjacent first fake teeth; the second salient pole includes a second core and a second end located at an end of the second core, at least two fake teeth are formed on an end face of the second end away from the second core, and a second fake slot is formed between two adjacent second fake teeth; or
the first salient pole includes a first core and a first end located at an end of the first core; the second salient pole includes a second core and a second end located at an end of the second core; or
the first salient pole includes a first core, and the second salient pole includes a second core; or
the first salient pole includes a first core, at least two first fake teeth are formed on an end face of the first core, and a first fake slot is formed between two adjacent first fake teeth; the second salient pole includes a second core, at least two second fake teeth are formed on an end face of the second core, and a second fake slot is formed between two adjacent second fake teeth.

Further, when the first salient pole includes the first fake slot, a first permanent magnet is provided in at least a part of the first fake slots.

Further, the second salient pole includes a second core and a second end located at an end of the second core, at least two second fake teeth are formed on an end face of the second end away from the second core, and a second fake slot is formed between two adjacent second fake teeth; or
the second salient pole includes a second core and a second end located at an end of the second core; or
the second salient pole includes a second core; or
the second salient pole includes a second core, at least two second fake teeth are formed on an end face of the second core, and a second fake slot is formed between two adjacent second fake teeth.

Further, when the second salient pole includes the second fake slot, a second permanent magnet is provided in at least a part of the second fake slots.

A second aspect of the disclosure provides a motor, which includes any stator as described above. The motor further includes a rotor. A gap is between the rotor and the stator to form a magnetic gap.

The rotor is provided corresponding to the plurality of first salient poles and the plurality of second salient poles.

Further, when the stator includes the plurality of first salient poles and the plurality of second salient poles extending from the yoke to one side, the rotor includes a first rotor; or
when the stator includes the plurality of first salient poles and the plurality of second salient poles extending from the yoke to two sides, the rotor includes a first rotor and a second rotor.

Further, when the stator includes the first fake teeth and the second fake teeth, at least two third fake teeth are formed on an end face of the rotor corresponding to the stator, and a third fake slot is formed between two adjacent third fake teeth.

A third aspect of the disclosure provides an automation device, which includes any motor as described above.

The technical scheme using the stator, motor and automation device of the present disclosure has the following beneficial effects:

1. Since a scheme in which the stator is formed with the isolation winding is formed based on the principle of forming multiple independent magnetic flux circuit modules, the stator core can be connected as a whole when the magnetic flux is decoupled. Therefore, the fault-tolerant performance of the motor is improved, and a good mechanical performance and easy machinability are ensured.

2. The thickness of the yokes of the stator core and the rotor core can be reduced respectively because the main magnetic flux flowing out of the first salient pole is shunted to the two second salient poles correspondingly provided on the two sides. Therefore, the overall weight and volume of the motor can be reduced, while the iron loss can be reduced.

3. Since the first salient pole includes the first fake slot, or the second salient pole includes the second fake slot, or the rotor includes the third fake slot, the force/torque of the motor can be increased by the magnetic flux modulation characteristics of the fake slots.

4. Since the first salient pole of the stator includes the first fake slot, the permanent magnet is embedded into at least a part of the first fake slots; or the second salient pole includes the second fake slot, the permanent magnet is embedded into at least a part of the second fake slots; or the rotor includes the third fake slot, the permanent magnet is embedded into at least a part of the third fake slots, so that the density of the magnetic flux can be increased, the magnetic flux leakage at the end of fake teeth can be reduced, and can be combined with the magnetic flux modulation characteristics of the vernier machine, thereby increasing the force/torque of the motor.

5. Since the first salient pole of the stator includes the first fake slot, the second salient pole includes the second fake slot, and the rotor includes the third fake slot, and a permanent magnet is provided in the at least a part of the first fake slots, the second fake slot, and the third fake slot, the motor with such a stator and a rotor can further improve the density of the magnetic flux, reduce the magnetic flux leakage at the fake teeth end, and can be combined with the magnetic flux modulation characteristics of the vernier machine, thereby improving the torque or force of the axial magnetic flux motor.

6. Since the first winding is directly wound on a first bidirectional salient pole, and the second winding is wound on the second salient pole, a concentrated winding is adopted. Therefore, the winding is simple to be made, and has a short end, reducing the copper loss.

7. Since the width of the first salient pole is larger than the width of the second salient pole, the requirement of magnetic flux shunting can be met while better reducing the iron loss.

8. Since $1.5 \leq D/d \leq 2.5$; where $D$ is the width of the first salient pole and $d$ is the width of the second salient pole, the requirement of magnetic flux shunting can be met while better reducing the iron loss.

BRIEF DESCRIPTION OF THE DRAWINGS

To describe the technical solutions of the embodiments of the present disclosure more clearly, the following briefly introduces the accompanying drawings required for describing the embodiments and the prior art. Apparently, the accompanying drawings in the following description are merely some embodiments of the present disclosure, and persons of ordinary skill in the art may still derive other drawings from these accompanying drawings without creative efforts.

FIG. 1 is a first schematic diagram of a structure of a stator of a rotary motor according to an embodiment of the present disclosure.

FIG. 2 is a second schematic diagram of a partial structure of a stator of a rotary motor according to an embodiment of the present disclosure.

FIG. 3 is a third schematic diagram of a partial structure of a stator of a rotary motor according to an embodiment of the present disclosure.

FIG. 4 is a fourth schematic diagram of a partial structure of a stator of a rotary motor according to an embodiment of the present disclosure.

FIG. 5 is a first schematic diagram of a structure of a radial magnetic flux rotary motor according to an embodiment of the present disclosure.

FIG. 6 is a first schematic diagram of a partial structure of an axial magnetic flux rotary motor in a deployed state or an axial magnetic flux linear motor according to an embodiment of the present disclosure.

FIG. 7 is a second schematic diagram of a partial structure of an axial magnetic flux rotary motor in a deployed state or an axial magnetic flux linear motor according to an embodiment of the present disclosure.

DETAILED DESCRIPTION

To enable a person skilled in the art to better understand the solutions of the present disclosure, the following clearly and completely describes the technical solutions in the embodiments of the present disclosure with reference to the accompanying drawings in the embodiments of the present disclosure. Apparently, the described embodiments are merely a part rather than all of the embodiments of the present disclosure. Based on the embodiments of the present disclosure, all other embodiments obtained by a person of ordinary skill in the art without creative efforts shall fall within the protection scope of the present disclosure.

The disclosure provides a stator, a motor and an automation device. Based on the principle of a modular motor, an integral structure design is adopted, so that the reliability of the motor is improved and the machining of the motor is easy.

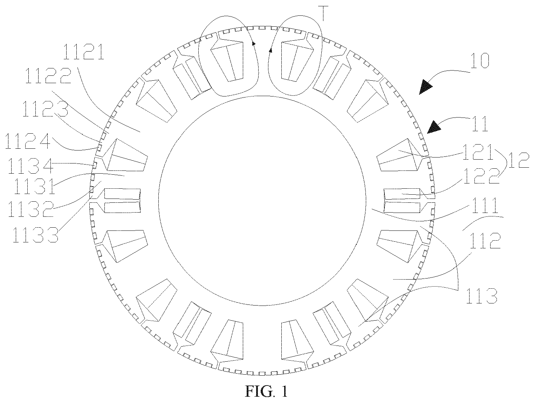

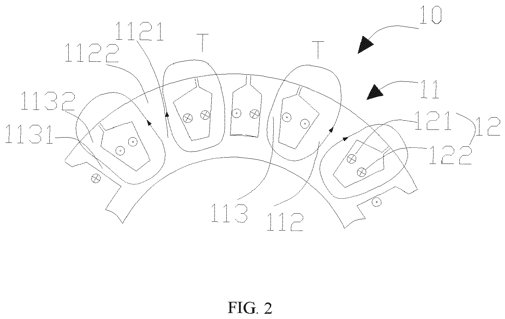

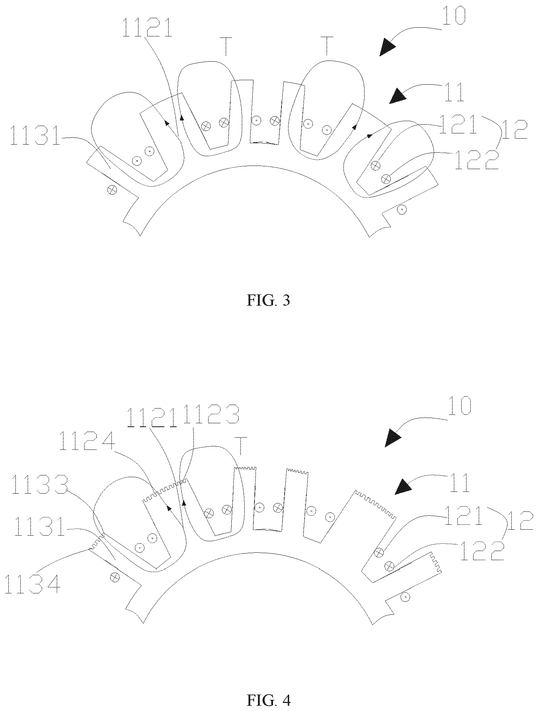

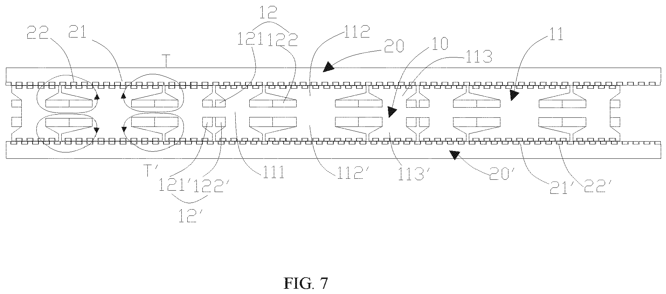

FIG. 1 is a first schematic diagram of a structure of a stator of a radial magnetic flux rotary motor according to an embodiment of the present disclosure. FIG. 2 is a second schematic diagram of a partial structure of a stator of a radial magnetic flux rotary motor according to an embodiment of the present disclosure. FIG. 3 is a third schematic diagram of a partial structure of a stator of a radial magnetic flux rotary motor according to an embodiment of the present disclosure. FIG. 4 is a fourth schematic diagram of a partial structure of a stator of a radial magnetic flux rotary motor according to an embodiment of the present disclosure. FIG. 7 is a second schematic diagram of a partial structure of an axial magnetic flux rotary motor that is in a deployed state or an axial magnetic flux linear motor according to an embodiment of the present disclosure.

An embodiment of the present disclosure provides a stator, which may be the stator of various motors. The motors may be categorized into different types on different basis. For example, based on a direction of the magnetic flux, the motors may be categorized into axial magnetic flux motors, radial magnetic flux motors, or hybrid magnetic flux motors. Based on the movement of the motor, the motors may include linear motors, rotary motors, and the like.

As shown in FIGS. 1 to 4, a radial magnetic flux rotary motor is used as an example. An embodiment of the present disclosure provides a stator 10. The stator 10 includes a stator core 11 and a winding 12.

The stator core 11 includes a yoke 111, and a plurality of first salient poles 112 and a plurality of second salient poles 113 extending from one side of the yoke 111 to a rotor. It should be noted that when it is an axial magnetic flux motor, the one side of the yoke is an axial side of the yoke, and when it is a radial magnetic flux motor, the one side of the yoke is a radial side of the yoke. In addition, as shown in FIG. 7, by taking the axial magnetic flux motor 10 as an example, a plurality of first salient poles 112, 112' and a plurality of second salient poles 113, 113' may be formed by extending from both sides of the yoke 111 to two rotors, respectively. An example in which the first salient poles and second salient poles are formed on one side of the yoke are further described in detail below.

The winding 12 includes a first winding 121 and a second winding 122.

The first salient pole 112 is wound with the first winding 121. The second salient pole 113 is wound with the second winding 122. The phase difference of currents between the first winding 121 and the second winding 122 is 180 degrees. Two sides of each of the plurality of first salient poles are respectively arranged the second salient pole corresponding to each first salient pole and out of the plurality of second salient poles, so that each first salient pole and the corresponding second salient poles on the both sides thereof form an independent magnetic flux T circuit module.

Because the first winding is wound on the first salient pole, and the second winding is wound on the second salient pole, a concentrated winding is adopted. Therefore, the winding is simple to be made, and has a short end, reducing the copper loss.

It should be noted that two sides of each first salient pole are arranged corresponding second salient poles. A second salient pole 113 (as shown in FIGS. 1 to 4) may be respectively provided on two sides of each first salient pole 112. In addition, two or more arbitrary number of second salient poles may be provided on both sides of each first salient poles.

It should be noted that the number of the first salient pole may be any number greater than or equal to 2. Since at least one second salient pole must be respectively provided on both sides of each first salient pole, the number of the second salient pole may be any number greater than or equal to 4.

Taking one of the salient poles 112 and the corresponding second salient poles 121 provided on both sides as an example, since the phases difference of currents between the first winding 121 and the second winding 122 is 180 degrees, the directions of the magnetic fields generated by the first salient pole 112 and the corresponding second salient poles 122 are opposite to each other. Therefore, the magnetic flux $T$ flowing out from the first salient poles 112 to the two sides, subjected to an attraction of the magnetic fields of the corresponding second salient poles 113 correspondingly provided on the two sides, returns to the first salient poles 112 (or only a few of the magnetic flux flowing to the other parts) after respectively passing through the corresponding second salient pole 113, thereby forming an independent magnetic flux circuit T module, which is composed of the first salient pole 112 and the corresponding second salient poles 113 and independent from other first salient poles and second salient poles. Therefore, on an integral motor, a plurality of independent magnetic flux circuit T modules composed of first salient poles and corresponding second salient poles on both sides of the first salient poles are formed.

Therefore, by using the stator described in the embodiment of the present disclosure, a scheme of isolating windings is formed based on the principle of forming a plurality of independent magnetic flux circuit modules, so that in the motor, the stator core can be connected as a whole when the magnetic circuit is decoupled. Therefore, the fault-tolerant performance of the motor is improved, and good mechanical performance and easy machinability are ensured.

On the other hand, since the main magnetic flux flowing out from the first salient pole is respectively shunted to two second salient poles correspondingly provided on the both sides thereof, the thickness of the yokes of the stator core and the rotor core can be reduced, thereby reducing the overall weight and volume of the motor while mitigating the iron loss.

It should be noted that the ratio of the width of the first salient pole to the width of the second salient pole may be arbitrary. In some embodiments, the width of the first salient pole is optionally larger than the width of the second salient pole. As a result, the magnetic flux shunting requirement can be satisfied and the iron loss can be reduced better.

Further, as long as it is ensured that the width of the first salient pole is larger than the width of the second salient pole, the width ratio relationship between the first salient pole and the second salient pole may be arbitrary. In some optional embodiments, $1.5 \leq D/d \leq 2.5$ is satisfied; where $D$ is the width of the first salient pole and $d$ is the width of the second salient pole, thereby further satisfying the magnetic flux shunting requirement while, at the same time, better reducing iron loss.

In some embodiments, the plurality of first salient poles may include but are not limited to the following forms:

As shown in FIG. 1, in the first embodiment, the first salient pole 112 includes a first core 1121 and a first end 1122 located at an end of the first core 1121. At least two first fake teeth 1123 are formed at an end face of the first end 1122 away from the first core 1121, and a first fake slot 1124 is formed between the two adjacent first fake teeth 1123. By setting the first fake slot, the magnetic flux is modulated so that the force/torque of the motor is increased.

As shown in FIG. 2, in the second embodiment, the first salient pole 112 includes a first core 1121 and a first end 1122 located at an end of the first core 1121.

As shown in FIG. 3, in the third embodiment, the first salient pole 112 includes the first core 1121.

As shown in FIG. 4, in a fourth embodiment, the first salient pole 112 includes the first core 1121. At least two first fake teeth 1123 are formed at an end face of the first core 1121. A first fake slot 1124 is formed between two adjacent first fake teeth 1123. By providing the first fake slot, the magnetic flux is modulated so that the force/torque of the motor is increased.

It should be noted that the width $D$ of the first salient pole 112 described in the foregoing embodiments generally refers to the width $D$ of the first core 1121, but may also be the width of the first end.

In some embodiments, the plurality of second salient poles may include but are not limited to the following forms:

As shown in FIG. 1, in the first embodiment, the same structure as in the first embodiment of the first salient pole is used, that is, the second salient pole 113 includes a second core 1131 and a second end 1132 located at the end of the second core 1131. At least two second fake teeth 1133 are formed at an end face of the second end 1132 away from the second core 1131, and a second fake slot 1134 is formed between two adjacent second fake teeth 1133. By setting the second fake slot, the magnetic flux is modulated, so that the force/torque of the motor is increased.

As shown in FIG. 2, in the second embodiment, the same structure as in the second embodiment of the first salient pole is used, that is, the second salient pole 113 includes a second core 1131 and a second end 1132 located at the end of the second core 1131.

As shown in FIG. 3, in the third embodiment, the same structure as in the third embodiment of the first salient pole is used, that is, the second salient pole 113 includes the second core 1131.

As shown in FIG. 4, in the fourth embodiment, the same structure as in the fourth embodiment of the first salient pole is used, that is, the second salient pole 113 includes the second core 1131. At least two second fake teeth 1133 are formed on an end face of the second core 1131, and a second fake slot 1134 is formed between two adjacent second fake teeth 1133. By providing the second fake slot, the magnetic flux is modulated so that the force/torque of the motor is increased.

It should be noted that the width $d$ of the second salient pole 112 described in the above embodiments generally refers to the width $d$ of the second core 1121, but may also be the width of the second end.

According to the structures of the first salient poles and second salient poles described in the foregoing embodiments, in some embodiments, the first salient poles and second salient poles may be combined by using the structure of the same embodiment. For example, the first salient poles 112 and second salient poles 113 respectively use the structures of the first embodiment (as shown in FIG. 1); in other embodiments, the structures of different embodiments may also be selected for combination to form the first salient poles and second salient poles. For example, the structure of the first embodiment is used for the first salient poles and the structure of the third embodiment is used for the second salient poles (not shown).

It should be noted that the first fake slot 1124 and the second fake slot 1134 in the above embodiments may be, but are not limited to, an open slot (as shown in FIGS. 1 to 4) having one end that is open, a closed slot (the open end of the open slot is covered), or a half-closed slot (the open end of the open slot is half-covered).

Further, in some embodiments, as described in the foregoing embodiments, when the first salient pole includes the first fake slot, a first permanent magnet is embedded in at least a part of the first fake slots, and optionally in each of the first fake slots (as shown in FIGS. 1 to 4). When the second salient pole includes a second fake slot, a second permanent magnet is embedded in at least a part of the second fake slots, and optionally in each of the second fake slot. The first fake slot and/or the second fake slot arranged the permanent magnet can be arranged one permanent magnet (as shown in FIGS. 1 to 4) or multiple permanent magnets, such as the Halbach array permanent magnet (not shown). The motor using the stator described above can improve the density of the magnetic flux, reduce the magnetic flux leakage at the fake teeth ends, and can be combined with the magnetic flux modulation characteristics of a vernier machine, thereby improving the torque (rotary motor)/force (linear motor) of the motor.

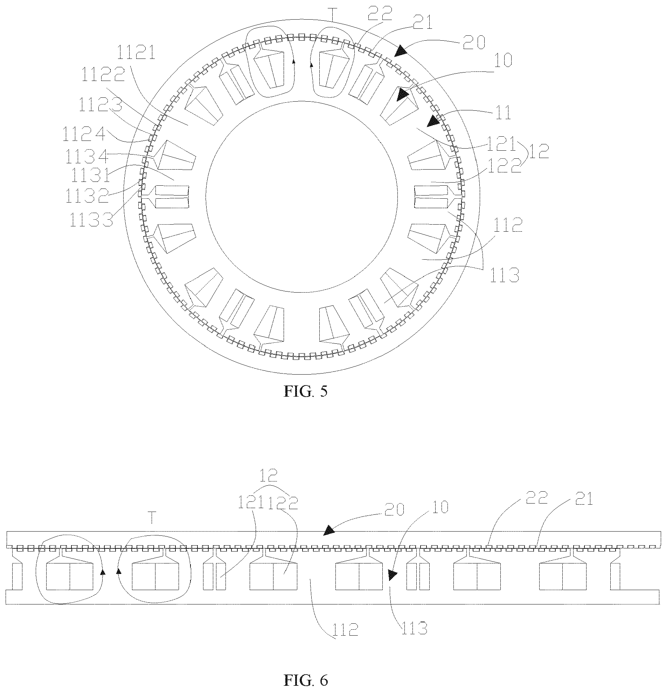

FIG. 5 is a first schematic diagram of a structure of a radial magnetic flux rotary motor according to an embodiment of the present disclosure. FIG. 6 is a first schematic diagram of a partial structure of an axial magnetic flux rotary motor in a deployed state or an axial magnetic flux linear motor according to an embodiment of the present disclosure.

The disclosure further provides a motor including the stator according to any one of the above embodiments and rotors provided corresponding to the plurality of first salient poles and the plurality of second salient poles of the stator.

As shown in FIGS. 5 and 6, in some embodiments, when the motor includes the first salient poles 112 and second salient poles 113 formed on one side of the yoke of the stator, the rotors includes a first rotor 20 provided only on the single side of the stator, corresponding to the plurality of first salient poles 112 and the plurality of second salient poles 113. There is a gap between the stator 10 and the first rotors 20 to form a magnetic gap.

As shown in FIG. 7, in other embodiments, when the yoke of the stator are formed with the plurality of first salient poles 112, 112' and the plurality of second salient poles 113, 113' on both sides, the rotors include the first rotors 20 and the second rotors 20' respectively corresponding to the first salient poles and second salient poles located on the both sides. Therefore, the first rotor 20 and the corresponding plurality of first salient poles 112 and the plurality of second salient poles 113 constitute a magnetic flux circuit $T$; the second rotor 20' forms a magnetic flux circuit $T'$ with the corresponding plurality of first salient poles 112' and second salient poles 113'.

The structure of the stator is described in the foregoing embodiments, and is omitted for brevity.

Therefore, by using the motor of the embodiments of the present disclosure, a scheme in which the stator is formed with an isolation winding is formed based on the principle of forming a plurality of independent magnetic line flux modules, so that in the motor, the stator core can be connected as a whole when the magnetic flux is decoupled. Therefore, the fault-tolerant performance of the motor is improved, and a good mechanical performance and easy machinability are ensured.

On the other hand, since the primary magnetic flux flow out of the first salient pole is respectively shunted to the corresponding two second salient poles correspondingly provided on the both sides, the thickness of the yokes of the stator core and the rotor core can be reduced, respectively, that is, the overall weight and volume of the motor can be reduced, and the iron loss can be reduced.

In some embodiments, as shown in FIGS. 5 and 6, at least two third fake teeth 21 are formed at an end face of the first rotor 20 corresponding to the stator 10, and a third fake slot 22 is formed between two adjacent third fake teeth 21. By setting the third fake slot, the magnetic flux is modulated so that the force/torque of the motor is increased.

The third fake slot 22 may be an open slot (as shown in FIG. 7), a closed slot or a half-closed slot.

Further, in some embodiments, permanent magnets may be provided in a part of the third fake slots or in each of the third fake slots. Each third fake slot can be arranged one permanent magnet or multiple permanent magnets, such as the Halbach array permanent magnet.

The third fake slot optionally corresponds to or may be different from the size of the first fake slot and the second fake slot. The motor using the above-mentioned rotors can improve the density of the magnetic flux, reduce the magnetic flux leakage at the fake teeth end, and can be combined with the magnetic flux modulation characteristics of a vernier machine, thereby improving the force/torque of the motor.

As shown in FIG. 7, similarly, the end faces of the first rotor 20 and the second rotor 20' corresponding to the stator 10 are formed with at least two third fake teeth 21 and 22', and a third fake slot 22 and 22' is formed between the two adjacent third fake teeth 21 and 21'. In some embodiments, at least a portion of the third fake slots 22, 22' are arranged a permanent magnet.

As shown in FIGS. 5, 6, in some optional embodiments, the first salient pole 112 of the stator is provided to include the first fake slot 1124 and the second salient pole 113 is provided to include the second fake slot 1134, and the rotor is provided to include the third fake slot 22 and/or 22', at least a part of the first fake slots 1124, the second fake slots 1134, and the third fake slots 22 and/or 22' are arranged the permanent magnet. Motors with such stators and rotors can further improve the density of the magnetic flux, reduce the magnetic flux leakage at the fake teeth ends, and can be combined with the magnetic flux modulation characteristics of the vernier machine, thereby increasing the torque or force of the motor.

In some embodiments, the disclosure further provides an automation device (not shown) including at least one of the motors described in the foregoing embodiments.

The automation device may be applied in various fields such as industry, medical treatment, daily life, transportation, etc. The robot can be regarded as a high-end automation device.

The related description of the motor is described in the above embodiment, and is omitted for brevity.

When an element is expressed as "fixed", "fixed" to another element, it can be directly on another element, or there can be one or more intermediary elements therebetween. When an element is expressed as "connected" to another element, it may be connected directly to another element, or there may be one or more intermediary elements therebetween. The terms "vertical", "horizontal", "left", "right", "inside", "outside", and similar expressions are used for illustrative purposes only.

Unless otherwise defined, all technical and scientific terms used in this specification have the same meaning as is commonly understood by those skilled in the art of the present disclosure. The usage in the description of the specification of the present disclosure is merely for the purpose of describing specific embodiments and is not intended to limit the present disclosure.

In this paper, the term "and/or" is merely a description of the relational relationship of an associated object, indicating that there may be three relationships, for example, A and/or B can indicate the existence of A alone, A and B together, and B alone. In addition, in this paper, the character "/" generally indicates that the antecedent-subsequent object is a "or" relationship.

The terms "first", "second", "third" and the like (if present) in the claims and specification of the present disclosure and the appended drawings are intended to distinguish between similar objects and are not necessarily intended to describe a particular order or precedence order. It should be understood that the terms so used may be interchangeable, as appropriate, so that the embodiments described herein can be implemented in a sequence other than those shown or described herein. In addition, the term "include", "have" and any of their variations are intended to encompass non-exclusive inclusion. For example, processes, methods, systems, products or equipment that include a series of steps or modules are not necessarily limited to those steps or modules that are clearly listed, but include other steps or modules that are not clearly listed or are inherent in such processes, methods, systems, products or equipment.

In the foregoing embodiments, the description of each embodiment has its own emphasis. For a part that is not described in detail in an embodiment, reference may be made to the related description of another embodiment.

It should be noted that a person skilled in the art should also appreciate that the embodiments described in the specification are optional embodiments, and the related structures and modules are not necessarily indispensable to the present disclosure.

The foregoing describes the stator, motor and automation device provided in the embodiments of the present disclosure in detail, but the foregoing embodiments are merely intended to help understand the methods and core ideas of the present disclosure, and should not be construed as limiting the present disclosure. Those skilled in the art, according to the idea of the present disclosure, within the technical scope disclosed in the present disclosure, may readily conceive changes or substitutions, all of which shall fall within the protection scope of the present disclosure.

**Claims**

1. A stator, comprising a stator core and a winding; the stator core comprising a yoke and a plurality of first salient poles and a plurality of second salient poles extending from the yoke to at least one side; the winding comprising a first winding and a second winding;
   wherein the first salient pole is wound with the first winding thereon; the second salient pole is wound with the second winding;
   wherein the phases difference of currents between the first winding and the second winding is 180 degrees;
   wherein two sides of each of the plurality of first salient poles are respectively arranged corresponding second salient poles of the plurality of second salient poles, so that a magnetic flux flowing out of the first salient pole is shunted to the corresponding second salient pole.

2. The stator according to claim 1, wherein a width of the first salient pole is greater than a width of the second salient pole.

3. The stator according to claim 2, wherein a ratio of the width of the first salient pole to the width of the second salient pole satisfies:

$$1.5 \leq D/d \leq 2.5;$$

   wherein $D$ is the width of the first salient pole and $d$ is the width of the second salient pole.

4. The stator according to claim 1 or 2 or 3, wherein the motor comprises a rotary motor or a linear motor; or
   the motor includes a radial magnetic flux motor or an axial magnetic flux motor.

5. The stator according to claim 1 or 2 or 3, wherein the first salient pole comprises a first core and a first end located at an end of the first core, at least two first fake teeth are formed on an end face of the first end away from the first core, and a first fake slot is formed between two adjacent first fake teeth; the second salient pole comprises a second core and a second end located at an end of the second core, at least two fake teeth are formed on an end face of the second end away from the second core, and a second fake slot is formed between two adjacent second fake teeth; or
the first salient pole comprises a first core and a first end located at an end of the first core; the second salient pole comprises a second core and a second end located at an end of the second core; or
the first salient pole comprises a first core, and the second salient pole comprises a second core; or
the first salient pole comprises a first core, at least two first fake teeth are formed on an end face of the first core, and a first fake slot is formed between two adjacent first fake teeth; the second salient pole comprises a second core, at least two second fake teeth are formed on an end face of the second core, and a second fake slot is formed between two adjacent second fake teeth.

6. The motor according to claim 5, wherein when the first salient pole comprises the first fake slot, a first permanent magnet is provided in at least a part of the first fake slots.

7. The stator according to claim 1, wherein the second salient pole comprises a second core and a second end located at an end of the second core, at least two second fake teeth are formed on an end face of the second end away from the second core, and a second fake slot is formed between two adjacent second fake teeth; or
the second salient pole comprises a second core and a second end located at an end of the second core; or
the second salient pole comprises a second core; or
the second salient pole comprises a second core, at least two second fake teeth are formed on an end face of the second core, and a second fake slot is formed between two adjacent second fake teeth.

8. The motor according to claim 7, wherein when the second salient pole comprises the second fake slot, a second permanent magnet is provided in at least a part of the second fake slots.

9. A motor comprising a stator according to any one of claims 1 to 8, the motor further comprising a rotor, a gap being between the rotor and the stator to form a magnetic gap; wherein the rotor is provided corresponding to the plurality of first salient poles and the plurality of second salient poles.

10. The motor according to claim 9, wherein when the stator comprises the plurality of first salient poles and the plurality of second salient poles extending from the yoke to one side, the rotor comprises a first rotor; or
when the stator comprises the plurality of first salient poles and the plurality of second salient poles extending from the yoke to two sides, the rotor comprises a first rotor and a second rotor.

11. The motor according to claim 9 or 10, wherein at least two third fake teeth are formed on an end face of the rotor corresponding to the stator, and a third fake slot is formed between two adjacent third fake teeth.

12. The motor according to claim 10, wherein a third permanent magnet is provided in at least a part of the third fake slots.

13. An automation device comprising the motor according to any one of claims 9 to 12.

FIG. 1

FIG. 2

EP 3 790 164 A1

FIG. 3

FIG. 4

FIG. 5

FIG. 6

FIG. 7

## INTERNATIONAL SEARCH REPORT

| International application No. |
|---|
| **PCT/CN2019/088747** |

**A. CLASSIFICATION OF SUBJECT MATTER**

H02K 1/14(2006.01)i; H02K 1/17(2006.01)i; H02K 3/28(2006.01)i

According to International Patent Classification (IPC) or to both national classification and IPC

**B. FIELDS SEARCHED**

Minimum documentation searched (classification system followed by classification symbols)

H02K

Documentation searched other than minimum documentation to the extent that such documents are included in the fields searched

Electronic data base consulted during the international search (name of data base and, where practicable, search terms used)

CNABS, CNTXT, DWPI, SIPOABS, CNKI, IEEE: 定子, 绕组, 芯, 凸极, 相位, 磁通; stator, coil, core, winding, phase, flux, MOTOR, MAGNETIC, POLE

**C. DOCUMENTS CONSIDERED TO BE RELEVANT**

| Category* | Citation of document, with indication, where appropriate, of the relevant passages | Relevant to claim No. |
|---|---|---|
| X | CN 1592034 A (PANASONIC CORPORATION) 09 March 2005 (2005-03-09) description, pages 5-17, and figures 1-6 | 1-4 |
| Y | CN 1592034 A (PANASONIC CORPORATION) 09 March 2005 (2005-03-09) description, pages 5-17, and figures 1-6 | 5-13 |
| Y | WO 2014/027631 A1 (MITSUBA CORPORATION) 20 February 2014 (2014-02-20) description, paragraphs [0021]-[0040], and figures 1-3 | 5-13 |
| PX | CN 108880014 A (NOVOMOTO LTD.) 23 November 2018 (2018-11-23) claims 1-13 | 1-13 |
| A | CN 206501112 U (NOVOMOTO LTD.) 19 September 2017 (2017-09-19) entire document | 1-13 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 July 2019** | **20 August 2019** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2019/088747**

| Patent document cited in search report | | | Publication date (day/month/year) | Patent family member(s) | | | Publication date (day/month/year) |
|---|---|---|---|---|---|---|---|
| CN | 1592034 | A | 09 March 2005 | JP | 2005073450 | A | 17 March 2005 |
| | | | | EP | 1511160 | A3 | 15 March 2006 |
| | | | | EP | 1511160 | A2 | 02 March 2005 |
| | | | | US | 2005046304 | A1 | 03 March 2005 |
| | | | | US | 7288868 | B2 | 30 October 2007 |
| WO | 2014/027631 | A1 | 20 February 2014 | JP | 6226867 | B2 | 08 November 2017 |
| | | | | WO | 2014027631 | S | 25 July 2016 |
| CN | 108880014 | A | 23 November 2018 | CN | 208862641 | U | 14 May 2019 |
| CN | 206501112 | U | 19 September 2017 | | None | | |

Form PCT/ISA/210 (patent family annex) (January 2015)